# EUROPÄISCHE PATENTANMELDUNG

(11) **EP 4 729 228 A1**
(43) Veröffentlichungstag der Anmeldung: **22.04.2026**
(21) Anmeldenummer: 25203391.5
(22) Anmeldetag: 19.09.2025
(51) Int. Cl.: B23K 26/38, B23K 26/70, B23K 37/04, B26D 7/18

(54) **VERFAHREN UND MASCHINELLE VORRICHTUNG ZUM HANDHABEN EINES PRODUKTVERBUNDS**

(30) Priorität: 21.10.2024 DE 102024210138
(71) Anmelder: TRUMPF Werkzeugmaschinen SE + Co. KG, 71254 Ditzingen (DE)
(72) Erfinder: Mach, Patrick, 71404 Korb (DE); Krause, Stefan, 02681 Wilthen (DE); Waurisch, Falk, 01877 Schmölln-Putzkau (DE)
(74) Vertreter: Trumpf Patentabteilung

(57) **Zusammenfassung**

Die Erfindung betrifft ein Verfahren zum Handhaben eines lösbaren Produktverbunds (2), der mindestens ein Werkstückteil und ein Restgitter aufweist, das Verfahren umfassend die Schritte: Lösen des mindestens einen Werkstückteils von dem Restgitter mittels mindestens eines Schwingungserzeugers (35) an einer Separierstation (10). Bei dem Verfahren wird der Produktverbund (2) an einer Halteeinrichtung (27) fixiert, die den Produktverbund (2) randseitig mit mindestens einem Halteorgan (28) untergreift. Das Lösen des mindestens einen Werkstückteils von dem Restgitter erfolgt an dem mittels der Halteeinrichtung (27) fixierten Produktverbund (2). Die Erfindung betrifft auch eine maschinelle Vorrichtung zum Handhaben eines lösbaren Produktverbunds (2), der mindestens eine Werkstückteil und ein Restgitter aufweist, umfassend: mindestens einen Schwingungserzeuger (35) zum Lösen des mindestens einen Werkstückteils von dem Restgitter an einer Separierstation (10) der maschinellen Vorrichtung (1), eine Halteeinrichtung (27) zum Fixieren des Produktverbunds (2), die mindestens ein Halteorgan (28) zum randseitigen Untergreifen des Produktverbunds (2) aufweist, wobei die maschinelle Vorrichtung ausgebildet ist, das mindestens eine Werkstückteil an dem mittels der Halteeinrichtung (27) fixierten Produktverbund (2) aus dem Restgitter zu lösen.

## Beschreibung

Die Erfindung betrifft ein Verfahren zum Handhaben eines lösbaren Produktverbunds, der mindestens ein Werkstückteil und ein Restgitter aufweist. Das Verfahren umfasst: Lösen des mindestens einen Werkstückteils von dem Restgitter mittels mindestens eines Schwingungserzeugers an einer Separierstation. Die Erfindung betrifft auch eine maschinelle Vorrichtung zum Handhaben eines lösbaren Produktverbunds, der mindestens ein Werkstückteil und ein Restgitter aufweist, umfassend: mindestens einen Schwingungserzeuger zum Lösen des mindestens einen Werkstückteils von dem Restgitter an einer Separierstation.

Bei der trennenden Werkstückbearbeitung eines plattenartigen Werkstücks, insbesondere eines Blechs, mittels einer Trennvorrichtung, beispielsweise mittels einer Laser-Trennvorrichtung, fallen als Bearbeitungsprodukte Werkstückteile und ein die Werkstückteile wenigstens teilweise umschließendes Restgitter an. Zur Vereinfachung des Abtransports der Bearbeitungsprodukte von der Trennvorrichtung ist es möglich, die Werkstückteile bei der trennenden Werkstückbearbeitung nicht vollständig vom Restgitter zu trennen. Zwischen dem Restgitter und den Werkstückteilen werden vielmehr Microjoints oder Nanojoints belassen, die es ermöglichen, das Restgitter und die Werkstückteile beim Entladen der Trennvorrichtung als Einheit zu handhaben. Außerdem ist es möglich, dass bei der trennenden Werkstückbearbeitung erzeugte Werkstückteile aufgrund auftretender thermischer Spannungen oder infolge eines Verkantens nach dem Trennvorgang in dem Restgitter gehalten werden. Es ist auch möglich, dass größere Werkstückteile, die nicht verkippen können, nicht im Restgitter fixiert werden. Das bzw. die Werkstückteile und das Restgitter bilden einen lösbaren Produktverbund. Das Lösen der Werkstückteile von dem Restgitter erfolgt in einem sich an die trennende Werkstückbearbeitung anschließenden Verfahrensschritt.

In der DE 10 2021 123 520 A1 ist ein Verfahren zum Ausschneiden wenigstens eines Werkstücks aus einer Blechtafel beschrieben, das folgende Schritte umfasst: Richten eines Laserstrahls auf die Blechtafel entlang eines Umrisses des Werkstücks, wobei in einem Hauptbereich des Umrisses die Blechtafel durchschnitten wird und wobei in wenigstens einem Verbindungsbereich des Umrisses zwischen dem Werkstück und einem angrenzenden Teil der Blechtafel wenigstens eine Verbindung bestehen bleibt, Entnehmen des wenigstens einen Werkstücks und des hiermit verbundenen angrenzenden Teils von der Auflage, sowie Trennen des wenigstens einen Werkstücks von dem angrenzenden Teil.

Bei dem in der DE 10 2021 123 520 A1 beschriebenen Verfahren kann eine Gruppe von Werkstücken gebildet werden, die über Verbindungen an wenigstens einer gemeinsamen Umrisslinie der Werkstücke miteinander verbunden sind. Beim Entnehmen kann eine Entnahmeeinrichtung an einem der Werkstücke der Gruppe angreifen. Zum Vereinzeln der Werkstücke kann die Entnahmeeinrichtung ein jeweiliges Restgitter-Teil schütteln bzw. rütteln, d.h. ruckartig hin- und herbewegen. Aufgrund der dabei erzeugten dynamischen Lasten brechen die Verbindungen und die Werkstücke fallen aus dem Restgitter-Teil heraus und können beispielsweise in einem Auffangbehälter gesammelt werden.

Die JP 2000094057 A beschreibt eine maschinelle Anordnung und ein Verfahren zur stanzenden Werkstückbearbeitung. An einer Stanzstation der maschinellen Anordnung werden aus einem plattenförmigen Material, das von einer Rolle abgewickelt wird, ein Restgitter und Werkstückteile erzeugt, wobei die Werkstückteile nach Abschluss der stanzenden Werkstückbearbeitung mit dem Restgitter über Microjoints verbunden sind. Der Verbund aus dem Restgitter und den daran angebundenen Werkstückteilen wird zu einer Separierstation bewegt, an der mehrere Rollenpaare in einer Bewegungsrichtung des Restgitters und der Werkstückteile aufeinanderfolgen und dabei senkrecht zur Bewegungsrichtung des Restgitters und der Werkstückteile abwechselnd nach oben und nach unten gegeneinander versetzt sind. Zwischen den Rollen jedes Rollenpaares ist ein Spalt ausgebildet. Von der Stanzstation kommend durchläuft das Restgitter mit den Werkstückteilen den Spalt an mehreren in der Bewegungsrichtung aufeinanderfolgenden Rollenpaaren, wobei das Restgitter mit den Werkstückteilen mehrfach gebogen wird. Gleichzeitig wird das Restgitter mit den Werkstückteilen in Vibration senkrecht zur Bewegungsrichtung versetzt. Infolgedessen brechen die bei der stanzenden Blechbearbeitung zwischen dem Restgitter und den Werkstückteilen verbliebenen Microjoints, und die von dem Restgitter gelösten Werkstückteile fallen auf eine Produktablage.

In der EP4257285A1 ist ein Transportsystem zum Trennen eines Skeletts von einem Produkt beschrieben. Das Transportsystem weist eine Greifervorrichtung und eine Hebevorrichtung auf. Die Greifervorrichtung umfasst eine Vielzahl von Längsseitengreifern zum Greifen der Längsseiten eines Außenrahmens des Skeletts und eine Mehrzahl von Kurzseitengreifern zum Greifen der Kurzseiten des Außenrahmens des Skeletts. Die Hebevorrichtung hebt die Greifvorrichtung, die den Außenrahmen und das Produkt greift, relativ an oder senkt diese ab und trennt dadurch den Außenrahmen vom Produkt. Das Transportsystem kann eine Palette und einen Träger umfassen, der relativ zur Palette auf- oder absteigt. Die Palette kann einen Palettenrahmen mit einer Vielzahl von Stützplatten aufweisen und der Träger kann eine Vielzahl von Hebeplatten aufweisen, die zwischen der Vielzahl von Stützplatten auf- oder absteigen. Das von den Hebeplatten gestützte Werkstück kann von der Greifervorrichtung am Außenrahmen gegriffen werden.

Die Aufgabe der vorliegenden Erfindung besteht darin, ein Verfahren und eine maschinelle Vorrichtung zum Handhaben eines lösbaren Produktverbunds bereitzustellen, die ein prozesssicheres und einfaches Handhaben eines Produktverbunds insbesondere beim Lösen von Werkstückteilen von einem Restgitter des Produktverbunds ermöglichen.

Erfindungsgemäß gelöst wird diese Aufgabe durch ein Verfahren der eingangs genannten Art, weiter umfassend: Fixieren des Produktverbunds an einer Halteeinrichtung, die den Produktverbund randseitig mit mindestens einem Halteorgan untergreift, wobei das Lösen des mindestens einen Werkstückteils von dem Restgitter an dem mittels der Halteeinrichtung fixierten Produktverbund erfolgt.

Die Halteeinrichtung dient zum in der Schwerkraftrichtung wirksamen Fixieren des Produktverbunds vor dem Lösen sowie während des Lösens des mindestens einen Werkstückteils von dem Restgitter des Produktverbunds. Die Halteeinrichtung dient auch zum in der Schwerkraftrichtung wirksamen Fixieren des Restgitters nach dem Lösen des mindestens einen Werkstückteils von dem Restgitter.

Bei dem hier beschriebenen Verfahren wird eine Halteeinrichtung zum Fixieren des Produktverbunds verwendet, die wenigstens ein Halteorgan aufweist, das den Produktverbund an seinem Rand untergreift und mittels dessen der Produktverbund an seinem Rand in der Schwerkraftrichtung wirksam fixierbar ist. Der Produktverbund des Restgitters und der Werkstückteile beziehungsweise das Restgitter alleine werden mittels der Halteeinrichtung typischerweise an dem Rand in vertikaler Richtung wirksam fixiert.

Bei den Halteorganen kann es sich beispielsweise um Greifer handeln, die den Produktverbund bzw. das Restgitter an dessen Rand untergreifen. Die Greifer können den Produktverbund beispielsweise zur Fixierung gegen eine Grundplatte der Halteeinrichtung drücken bzw. klemmen. Durch das Fixieren bzw. Klemmen mittels der Halteeinrichtung kann ein automatisiertes Lösen der Werkstückteile von dem Restwerkstück mittels des Schwingungserzeugers prozesssicher durchgeführt werden. Die Werkstückteile werden kontrolliert aus dem Restwerkstück gelöst und fallen unter Schwerkraftwirkung auf eine unterhalb des Produktverbunds angeordnete Produktablage.

Bei einer Variante wird der Produktverbund an der Separierstation mittels der Halteeinrichtung von einer Produktpalette aufgenommen. In diesem Fall fixiert die Halteeinrichtung den auf der Produktpalette aufliegenden Produktverbund in der Separierstation. Die Produktpalette ist ausgebildet, das randseitige Untergreifen durch das bzw. die Halteorgane der Halteeinrichtung zu ermöglichen. Die Produktpalette weist zu diesem Zweck Auflageelemente auf, die zur gemeinschaftlichen Lagerung des mindestens einen Werkstückteils und des Restgitters in Schwerkraftrichtung ausgebildet sind. Bei den Auflageelementen kann es sich beispielsweise um Auflageleisten oder dergleichen handeln.

Der Produktverbund wird in diesem Fall mittels der Halteeinrichtung von der Produktpalette angehoben, um das Lösen der Werkstückteile vom Restgitter mittels des Schwingungserzeugers zu ermöglichen. Die durch die Schwingungen von dem Restgitter gelösten Werkstückteile fallen unter Schwerkraftwirkung nach unten auf eine an der Separierstation angeordnete Produktauflage, während das Restgitter an der Halteeinrichtung verbleibt.

Es ist möglich, dass die Produktpalette, von welcher der Produktverbund aufgenommen wird, vor dem Lösen der Werkstückteile vom Restgitter aus der Separierstation transportiert wird und/oder dass die Produktpalette als Produktauflage für die vom Restgitter gelösten Werkstückteile dient.

Generell können die vom Restgitter gelösten Werkstückteile auf einer beliebigen geeigneten Produktauflage abgelegt werden, die an der Separierstation angeordnet ist oder die zu diesem Zweck an der Separierstation positioniert wird. Beispielsweise kann die Produktauflage ein Podest bilden oder als Förderband ausgebildet sein, das mit Hilfe einer Transporteinrichtung zwischen der Separierstation und einer Entnahmestation zur Entnahme der Werkstückteile hin- und herbewegt wird oder das dauerhaft an der Separierstation angeordnet ist und sich von der Separierstation zur Entnahmestation erstreckt. Im letzteren Fall können die Werkstückteile in der Separierstation unter Schwerkraftwirkung auf das Förderband fallen, welches die Werkstückteile an die Entnahmestation transportiert.

Bei einer Variante des Verfahrens wird der Produktverbund mittels einer Transporteinrichtung von einer Übergabestation an die Separierstation transportiert. Die Transporteinrichtung zum Transport des Produktverbunds von der Übergabestation an die Separierstation kann auf unterschiedliche Weise ausgebildet sein. Zu der Übergabestation kann der Produktverbund beispielsweise von einer Trennstation einer Trenneinrichtung, beispielsweise einer Laser-Trenneinrichtung, transportiert werden. Auch der Transport des Produktverbunds von einer Lagerstation eines Lagersystems an die Übergabestation ist möglich. In diesem Fall kann eine geeignet ausgebildete Transporteinrichtung, beispielsweise in Form eines fahrerlosen Transportsystems, den Produktverbund von der Lagerstation des Lagersystems zur Übergabestation transportieren. Auch ein teilautomatisierter Transport zur Übergabestation ist möglich.

Bei einer Weiterbildung dieser Variante wird der Produktverbund auf der Produktpalette gelagert mittels der Transporteinrichtung von der Übergabestation zur Separierstation transportiert. Bevorzugt wird der Produktverbund in diesem Fall an der Übergabestation auf der Produktpalette abgelegt. In diesem Fall kann die Produktpalette eine Führungseinrichtung, z.B. in Form von Führungsrollen, aufweisen, die mit ortsfesten Führungsschienen der Transporteinrichtung zusammenwirken, um die Produktpalette mit dem darauf gelagerten Produktverbund von der Übergabestation an die Separierstation zu transportieren.

Auch der Transport des Produktverbunds von der Trennstation an die Übergabestation kann mit Hilfe einer Produktpalette erfolgen, auf welcher der Produktverbund gelagert ist. Es ist möglich, dass für den Transport des Produktverbunds von der Trennstation zur Übergabestation und für den Transport des Produktverbunds von der Übergabestation zur Separierstation unterschiedliche Produktpaletten verwendet werden. Es ist in diesem Fall beispielsweise möglich, dass der Produktverbund an der Übergabestation mittels einer Handhabungseinrichtung aufgenommen wird, die eine Auflage, z.B. einen Rechen oder dergleichen, aufweist, welche den Produktverbund untergreift und von einer ersten Produktpalette anhebt, die zum Transport des Produktverbunds zwischen der Trennstation und der Übergabestation dient. In diesem Fall kann die erste Produktpalette nach dem Anheben des Produktverbunds durch eine zweite Produktpalette ausgetauscht werden, die zum Transport des Produktverbunds von der Übergabestation zur Separierstation dient. Der Produktverbund wird in diesem Fall von der Handhabungseinrichtung an der Übergabestation auf der zweiten Produktpalette abgelegt. Die Handhabungseinrichtung kann eine Hubeinrichtung aufweisen, um die Auflage, die den Produktverbund untergreift, anzuheben oder abzusenken.

Bei einer Weiterbildung weist die Produktpalette einen rechteckigen Palettenrahmen mit zwei Rahmenschenkelpaaren auf, wobei ein erstes der Rahmenschenkelpaare eine erste Führungseinrichtung aufweist, mittels derer die Produktpalette beim Transport von der Übergabestation an die Separierstation geführt wird und/oder ein zweites der Rahmenschenkelpaare weist eine zweite Führungseinrichtung auf, mittels derer die Produktpalette von der Separierstation an eine Entnahmestation transportiert wird. Als Führungseinrichtungen kommen beispielsweise Führungseinrichtungen mit Führungsrollen in Frage, die bei Bewegungen der Produktpalette mit zugeordneten Führungsschienen zusammenwirken. Die Produktpalette wird beim Transport von der Übergabestation zur Separierstation bzw. von der Separierstation zur Entnahmestation in Längsrichtung eines jeweiligen mit einer Führungseinrichtung versehenen Rahmenschenkelpaars geführt.

Der Transport der Produktpalette von der Übergabestation zur Separierstation kann mittels einer Führungseinrichtung eines längsseitigen Rahmenschenkelpaars oder mittels einer Führungseinrichtung eines querseitigen Rahmenschenkelpaars des Palettenrahmens erfolgen. Die Führung des Palettenrahmens von der Separierstation zur Entnahmestation kann mittels einer Führungseinrichtung des jeweils anderen Rahmenschenkelpaares erfolgen. Auf diese Weise kann die Produktpalette mittels der beiden Führungseinrichtungen entlang ihrer Längsseite oder entlang ihrer Querseite transportiert werden.

Bei einer weiteren Weiterbildung weist die Produktpalette eine mit Auflageelementen versehene Elementeinheit auf, die eines der Rahmenschenkelpaare umfasst, sowie eine mit einer Auflagefläche versehene Flächeneinheit, die das andere Rahmenschenkelpaar umfasst, wobei in einem ersten Funktionszustand der Produktpalette, in der die Auflageelemente der Elementeinheit gegenüber der Auflagefläche der Flächeneinheit nach oben vorstehen, der Produktverbund mittels der Halteeinrichtung aufgenommen wird und wobei in einem zweiten Funktionszustand der Produktpalette, in der die Auflageelemente der Elementeinheit nicht gegenüber der Auflagefläche der Flächeneinheit nach oben vorstehen, von dem Restgitter gelöste Werkstückteile auf der Produktpalette abgelegt werden.

Bei dieser Variante erfolgt das Aufnehmen des Produktverbunds von der Produktpalette in dem ersten Funktionszustand, in dem die Halteeinrichtung den Produktverbund mit dem bzw. mit den Halteorganen untergreift. Vor dem Separieren der Werkstückteile wird die Produktpalette in den zweiten Funktionszustand überführt, in dem die Auflageelemente nicht nach oben über die Auflagefläche der Flächeneinheit überstehen. In dem zweiten Funktionszustand bildet die Produktpalette an ihrer Oberseite bevorzugt eine ebene Auflagefläche, die in besonderem Maße eine schonende und geordnete Ablage der von dem Restgitter gelösten Werkstückteile ermöglicht.

Zum Wechsel vom ersten Funktionszustand in den zweiten Funktionszustand können die Elementeinheit der Produktpalette und die Flächeneinheit der Produktpalette in vertikaler Richtung relativ zueinander wahlweise in eine erste Relativposition oder in eine zweite Relativposition zugestellt werden. Für die Zustellung der Produktpalette in den beiden Relativpositionen kann an der Separierstation eine Hubvorrichtung vorgesehen sein.

Bei der hier beschriebenen Produktpalette kann die Führungseinrichtung an dem einen Rahmenschenkelpaar bei der ersten Relativposition der Elementeinheit und der Flächeneinheit und somit bei dem ersten Funktionszustand der Produktpalette genutzt werden, um den Produktverbund von der Übergabestation an die Separierstation zu transportieren. Die Führungseinrichtung an dem anderen Rahmenschenkelpaar kann bei der zweiten Relativposition der Elementeinheit und der Flächeneinheit und somit bei dem zweiten Funktionszustand der Produktpalette genutzt werden, um die Werkstückteile zu transportieren, die nach dem Lösen vom Restgitter auf der Auflagefläche der Produktpalette aufliegen. An der Entnahmestation können die Werkstückteile von der typischerweise ebenen Auflagefläche der Produktpalette automatisiert oder manuell absortiert werden.

Bei einer Weiterbildung wird die Produktpalette mit dem darauf abgelegten Produktverbund an der Übergabestation mittels einer Auflage der Transporteinrichtung untergriffen und zur Separierstation transportiert. Bei dieser Variante wird die Produktpalette vollautomatisiert oder ggf. teilautomatisiert, beispielsweise mittels eines Krans, eines Gabelstaplers oder dergleichen untergriffen und von der Übergabestation an die Separierstation transportiert und dort abgestellt. Nachdem die Halteeinrichtung an der Separierstation den Produktverbund randseitig untergriffen und fixiert hat, kann die Produktpalette ohne den darauf gelagerten Produktverbund mittels der Transporteinrichtung zur Übergabestation zurück transportiert werden, um nachfolgend einen weiteren Produktverbund auf der Produktpalette abzulegen. Bei dieser Weiterbildung ist die Produktpalette in der Regel nicht zwischen zwei Funktionszuständen umschaltbar, d.h. es handelt sich um eine herkömmliche Produktpalette, die nur einen Funktionszustand aufweist, bei der Auflageelemente für die Lagerung des Produktverbunds über eine Auflagefläche nach oben vorstehen. Grundsätzlich ist aber auch in diesem Fall die Verwendung einer Produktpalette möglich, die in zwei Funktionszustände überführbar ist.

Bei einer alternativen Variante wird der Produktverbund an der Übergabestation von einer Auflage der Transporteinrichtung untergriffen und auf der Auflage aufliegend an die Separierstation transportiert. Bei dieser Variante wird der Transport des Produktverbunds mit Hilfe einer Transporteinrichtung vorgenommen, die den Produktverbund mittels einer geeigneten Auflage, beispielsweise mittels eines Rechens oder dergleichen, untergreift. Der Produktverbund kann in diesem Fall an der Übergabestation mittels der Auflage untergriffen, von einer Produktpalette abgehoben und an die Separierstation transportiert werden.

Der Produktverbund kann an der Separierstation mittels der Transporteinrichtung auf einer Produktpalette abgelegt werden, die zwei Funktionszustände oder nur einen Funktionszustand aufweist. Es ist aber auch möglich, dass der Produktverbund an der Separierstation auf der Auflage der Transporteinrichtung aufliegend von der Halteeinrichtung aufgenommen wird, indem mindestens ein Halteorgan der Halteeinrichtung den Produktverbund randseitig untergreift. In diesem Fall ist es günstig, wenn die Auflage der Handhabungseinrichtung in Form eines Rechens oder dergleichen ausgebildet ist, da dies die Fixierung an der Halteeinrichtung vereinfacht.

Bei einer weiteren alternativen Variante wird der Produktverbund an der Übergabestation von dem mindestens einen Halteorgan der Halteeinrichtung randseitig untergriffen und mittels der Halteeinrichtung zur Separierstation transportiert. In diesem Fall bildet die Halteeinrichtung die Transporteinrichtung. An der Separierstation kann in diesem Fall als Produktablage beispielsweise eine Produktpalette oder ein Förderband angeordnet sein, auf das die Werkstückteile nach dem Lösen von dem Restgitter fallen. Die Werkstückteile können von der Separierstation an eine Entnahmestation transportiert werden, um diese von der Produktauflage abzusortieren.

Bei allen weiter oben beschriebenen Varianten kann das an der Halteeinrichtung fixierte Restgitter durch Lösen der Fixierung abgeworfen werden und unter Schwerkraftwirkung beispielsweise in eine Mulde, einem Restgitterwagen oder dergleichen fallen. Die Halteeinrichtung mit dem daran fixierten Restgitter kann zu diesem Zweck auch an eine Ablagestation zur Ablage bzw. zum Abwurf des Restgitters transportiert werden.

Ein weiterer Aspekt der Erfindung betrifft eine maschinelle Vorrichtung der eingangs genannten Art, weiter umfassend: eine Halteeinrichtung zum Fixieren des Produktverbunds, die mindestens ein Halteorgan zum randseitigen Untergreifen des Produktverbunds aufweist, wobei die maschinelle Vorrichtung ausgebildet ist, das mindestens eine Werkstückteil an dem mittels der Halteeinrichtung fixierten Produktverbund aus dem Restgitter zu lösen.

Der mindestens eine Schwingungserzeuger kann gemeinsam mit der Halteeinrichtung eine Separiereinheit ausbilden. Mittels des mindestens einen Schwingungserzeugers kann die Haltevorrichtung mit dem Produktverbund in Schwingungen bzw. in Vibrationen versetzt werden. Aufgrund der Vibration des Produktverbunds werden die Werkstückteile aus dem Restgitter gelöst, typischerweise indem zwischen den Werkstückteilen und dem Restgitter verbliebene Micro- oder Nanojoints aufgebrochen werden. Nach dem Lösen der Werkstückteile verbleibt das Restgitter an der Halteeinrichtung, während die Werkstückteile unter Schwerkraftwirkung auf eine Produktablage fallen, die sich an der Separierstation unterhalb der Halteeinrichtung befindet.

Bei einer Ausführungsform west die maschinelle Vorrichtung eine Transporteinrichtung zum Transport des Produktverbunds von einer Übergabestation der maschinellen Vorrichtung an die Separierstation auf. Die Transporteinrichtung kann auf unterschiedliche Weise ausgebildet sein.

Bei einer Weiterbildung dieser Ausführungsform weist die maschinelle Vorrichtung eine Produktpalette zur Auflage des Produktverbunds auf, wobei die Transporteinrichtung zum Transport der Produktpalette mit dem daran gelagerten Produktverbund von der Übergabestation an die Separierstation ausgebildet ist. Bei dieser Ausführungsform weist die Transporteinrichtung typischerweise einen Antrieb auf, um die Produktpalette von der Übergabestation zur Separierstation entlang von Führungsschienen der Transporteinrichtung zu bewegen.

Bei einer Weiterbildung dieser Ausführungsform weist die Produktpalette einen rechteckigen Palettenrahmen mit zwei Rahmenschenkelpaaren auf, wobei ein erstes der Rahmenschenkelpaare eine erste Führungseinrichtung zur Führung der Produktpalette beim Transport von der Übergabestation an die Separierstation aufweist und/oder wobei ein zweites der Rahmenschenkelpaare eine zweite Führungseinrichtung zur Führung der Produktpalette beim Transport von der Separierstation an eine Entnahmestation aufweist.

Wie weiter oben in Zusammenhang mit dem Verfahren beschrieben wurde, können die Führungseinrichtungen Führungsrollen aufweisen oder aus Führungsrollen bestehen, die zur Bewegung der Produktpalette mit zugeordneten Führungsschienen der Transporteinrichtung zusammenwirken. Die Produktpalette wird beim Transport von der Übergabestation zur Separierstation und/oder von der Separierstation zur Entnahmestation in Längsrichtung eines jeweiligen mit einer Führungseinrichtung versehenen Rahmenschenkelpaars geführt.

Bei einer Weiterbildung dieser Ausführungsform weist die Produktpalette eine mit Auflageelementen versehene Elementeinheit auf, die eines der Rahmenschenkelpaare umfasst, sowie eine mit einer Auflagefläche versehene Flächeneinheit, die das andere Rahmenschenkelpaar umfasst, wobei die Elementeinheit und die Flächeneinheit von einem ersten Funktionszustand, in dem die Auflageelemente der Elementeinheit gegenüber der Auflagefläche der Flächeneinheit nach oben vorstehen, in einen zweiten Funktionszustand überführbar ist, in der die Auflageelemente der Elementeinheit nicht gegenüber der Auflagefläche der Flächeneinheit nach oben vorstehen. In dem zweiten Funktionszustand weist die Produktpalette bevorzugt eine ebene Auflagefläche auf. Die Überführung zwischen dem ersten Funktionszustand und dem zweiten Funktionszustand kann durch eine Bewegung der Elementeinheit und der Flächeneinheit in vertikaler Richtung zwischen einer ersten Relativposition und einer zweiten Relativposition erfolgen. Zur Bewegung zwischen der ersten Relativposition und der zweiten Relativposition kann die maschinelle Vorrichtung beispielsweise eine Hubeinrichtung aufweisen, die an der Separierstation angeordnet ist.

Bei einer alternativen Ausführungsform ist die Transporteinrichtung ausgebildet, die Produktpalette mit dem daran gelagerten Produktverbund an der Übergabestation mit einer Auflage zu untergreifen und auf der Auflage aufliegend zur Separierstation zu transportieren. In diesem Fall weist die Transporteinrichtung typischerweise eine Hubeinrichtung auf, die ausgebildet ist, die Auflage anzuheben, wenn diese die Produktpalette an der Übergabestation untergreift. Die Hubeinrichtung dient auch dazu, die Auflage mit der darauf gelagerten Produktpalette an der Separierstation abzustellen.

Bei einer weiteren alternativen Ausführungsform weist die Transporteinrichtung eine Auflage zum Untergreifen des Produktverbunds auf und ist ausgebildet, den Produktverbund auf der Auflage aufliegend von der Übergabestation zur Separierstation zu transportieren. Wie weiter oben in Zusammenhang mit dem Verfahren beschrieben wurde, kann die Auflage beispielsweise in der Art eines Rechens oder dergleichen ausgebildet sein.

Bei einer weiteren alternativen Ausführungsform ist die Transporteinrichtung durch die Halteeinrichtung gebildet, die ausgebildet ist, den Produktverbund an der Übergabestation mit dem mindestens einen Halteorgan randseitig zu untergreifen und zur Separierstation zu transportieren. Der Produktverbund kann an der Übergabestation beispielsweise auf den Auflageelementen einer Produktpalette aufliegen, die ein Untergreifen des Produktverbunds mittels des mindestens einen Halteorgans ermöglichen.

Nachstehend wird die Erfindung anhand beispielhafter schematischer Darstellungen näher erläutert. Es zeigen:
- Figur 1: eine schematische Darstellung einer maschinellen Vorrichtung zur Handhabung eine lösbaren Produktverbunds, der an einer Übergabestation auf einer Produktpalette abgelegt ist, die zwei Funktionszustände aufweist,
- Figur 2: eine schematische Darstellung der maschinellen Vorrichtung von Figur 1 beim Transport der Produktpalette von der Übergabestation zu einer Separierstation,
- Figur 3: die Produktpalette gemäß Figur 1 und Figur 2 in einem ersten Funktionszustand
- Figur 4: die Produktpalette gemäß Figur 3 in einem zweiten Funktionszustand,
- Figur 5: eine Schnittdarstellung der Produktpalette gemäß Figur 3 in einer in Figur 3 angedeuteten Schnittebene V,
- Figur 6: eine schematische Darstellung der Separierstation mit der mit dem lösbaren Produktverbund beladenen Produktpalette,
- Figur 7: die Separierstation gemäß Figur 6 in der senkrechten Ansicht in Richtung des Pfeils V in Figur 6 und
- Figuren 8 bis 12: die Abläufe an der Separierstation gemäß den Figuren 6 und 7 ausgehend von den Verhältnissen gemäß den Figuren 6 und 7.

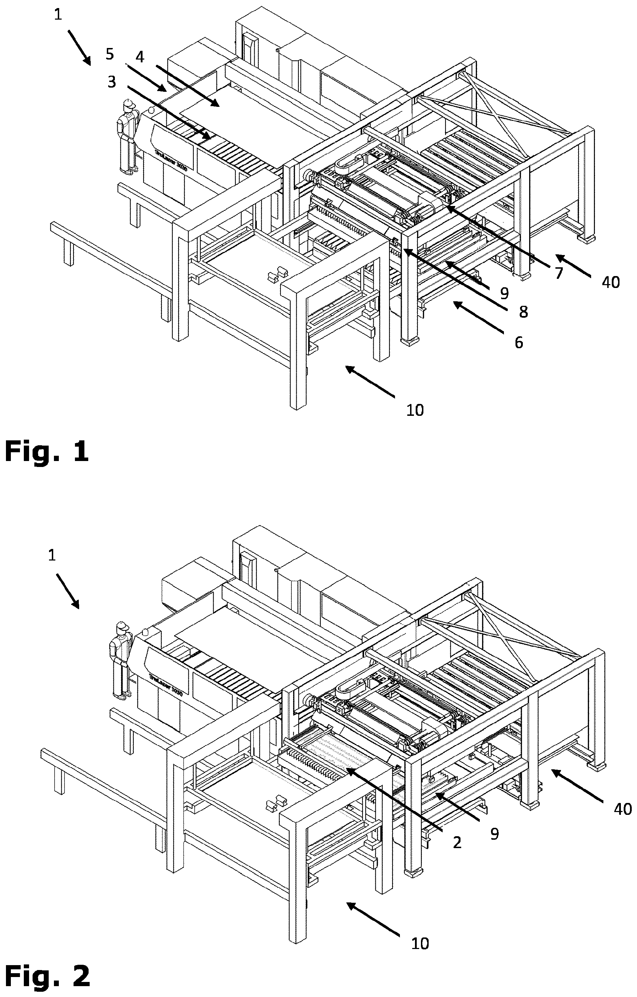

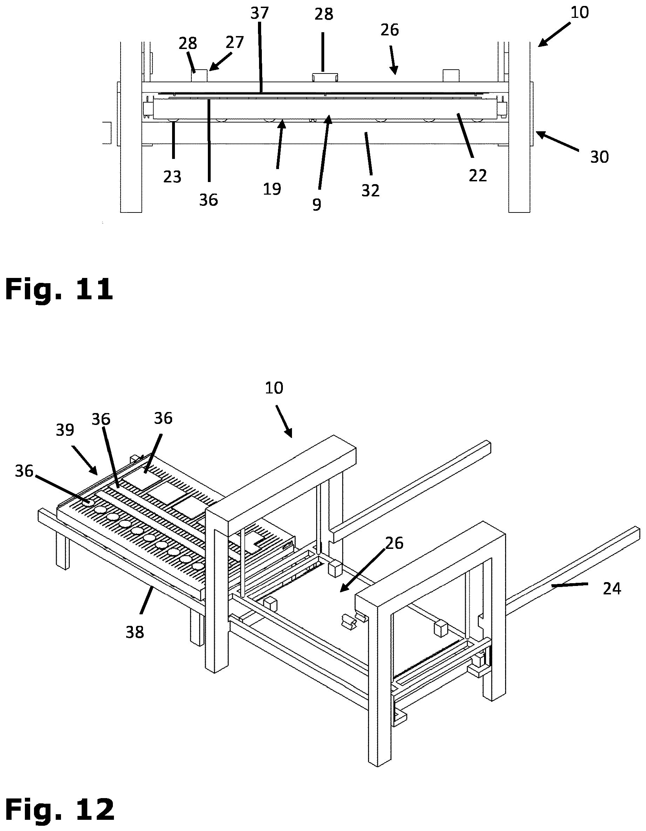

Figur 1 und Figur 2 zeigen eine maschinelle Vorrichtung 1 zum Handhaben eines lösbaren Produktverbunds 2, der Werkstückteile 36 und ein Restgitter 37 aufweist (vgl. Figur 11 und Figur 12). Der lösbare Produktverbund 2 wurde durch trennende Bearbeitung eines Rohblechs 4 an einer Laserschneidmaschine 5 hergestellt. Die Laserschneidmaschine 5 bildet eine Trennstation der maschinellen Vorrichtung 1. Bei der trennenden Blechbearbeitung wurde der lösbare Produktverbund 2 gebildet, indem zwischen den Werkstückteilen 36 und dem Restgitter 37 Nanojoints belassen wurden.

In einem Arbeitsraum der Laserschneidmaschine 5 war das Rohblech 4 bei der trennenden Bearbeitung auf einer Produktpalette 3 gelagert. Nach Beendigung der trennenden Blechbearbeitung wird die nun mit dem lösbaren Produktverbund 2 beladene Produktpalette 3 aus dem Arbeitsraum der Laserschneidmaschine 5 abgeführt und zu einer Übergabestation 6 der maschinellen Vorrichtung 1 transferiert.

An der Übergabestation 6 wird der Produktverbund 2 von einer Handhabungseinrichtung 7 aufgenommen, indem eine Rechenauflage 8 der Handhabungseinrichtung 7 den auf der Produktpalette 3 gelagerten Produktverbund 2 untergreift und aushebt. Nachfolgend wird eine Produktpalette 9 an die Übergabestation 6 transferiert, die zwei Funktionszustände aufweist, wie weiter unten näher beschrieben ist. Der Handhabungseinrichtung 7 legt den Produktverbund 2 auf der Produktpalette 9 mit den zwei Funktionszuständen ab und die Rechenauflage 8 wird geöffnet. Die Rechenauflage 8 hebt nachfolgend von der Produktpalette 9 ab. Die Produktpalette 9 mit dem darauf abgelegten Produktverbund 2 wird in einem nachfolgenden Schritt von der Übergabestation 6 zu einer Separierstation 10 der maschinellen Vorrichtung 1 transportiert, wie in Figur 2 angedeutet ist.

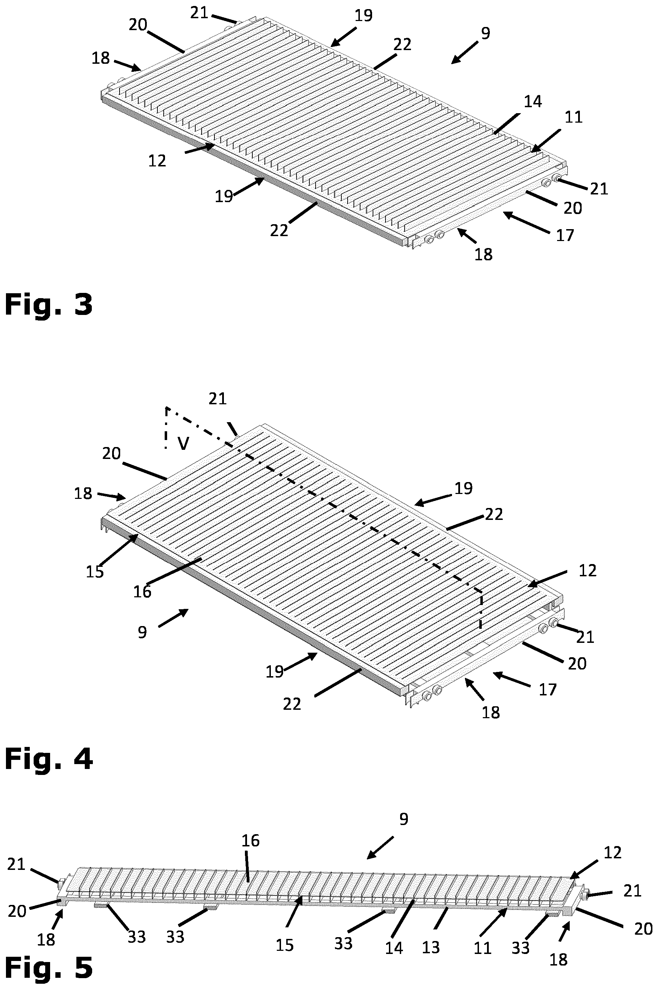

Figur 3 bis Figur 5 zeigen die Produktpalette 9 mit den zwei Funktionszuständen, die eine Elementeinheit 11 und eine Flächeneinheit 12 umfasst. Die Elementeinheit 11 der Produktpalette 9 weist als Basis eine Grundplatte 13 (Figur 5) auf, an der als Auflageleisten 14 ausgebildete Auflageelemente der Elementeinheit 11 nach oben vorstehen. Mit der Grundplatte 13 ist die Elementeinheit 11 unterhalb einer Auflageplatte 15 der Flächeneinheit 12 der Produktpalette 9 angeordnet. Die Auflageplatte 15 weist an ihrer Oberseite eine Auflagefläche 16 auf und ist an der Auflagefläche 16 mit durch Striche angedeutete Durchtrittsöffnungen für die Auflageleisten 14 der Elementeinheit 11 versehen.

Ein rechteckiger Palettenrahmen 17 der Produktpalette 9 umfasst zwei Rahmenschenkelpaare 18, 19, von denen das Rahmenschenkelpaar 18 Teil der Elementeinheit 11 und das Rahmenschenkelpaar 19 Teil der Flächeneinheit 12 ist.

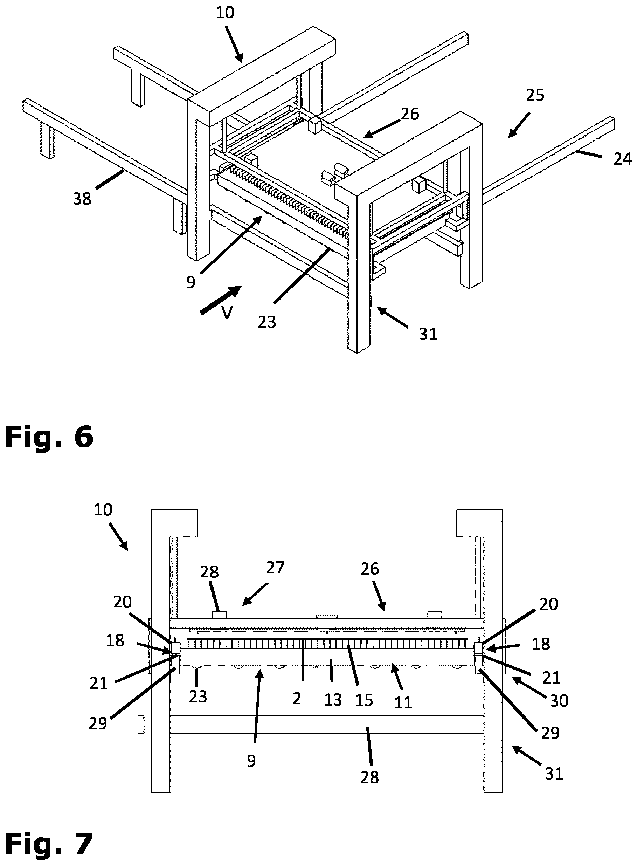

Jeder der Rahmenschenkel 20 des Rahmenschenkelpaars 18 der Elementeinheit 11 ist mit einer Führungseinrichtung in Form von Führungsrollen 21 versehen. Die Führungsrollen 21 führen die Produktpalette 9 bei Bewegungen in Längsrichtung der Rahmenschenkel 20 der Elementeinheit 11. Entsprechend sind an den Rahmenschenkeln 22 des Rahmenschenkelpaars 19 der Flächeneinheit 12 als Führungseinrichtung Führungsrollen 23 vorgesehen (vgl. Figur 6). Mittels der Führungsrollen 23 wird die Produktpalette 9 bei Bewegungen in Längsrichtung der Rahmenschenkel 22 der Flächeneinheit 12 geführt.

Die Elementeinheit 11 und die Flächeneinheit 12 der Produktpalette 9 sind in vertikaler Richtung relativ zueinander zustellbar. Dadurch kann die Produktpalette 9 in einen ersten Funktionszustand und in einen zweiten Funktionszustand überführt werden.

In dem in Figur 3 gezeigten und bei einer ersten Relativposition der Elementeinheit 11 und der Flächeneinheit 12 vorliegenden ersten Funktionszustand dient die Produktpalette 9 dazu, den weiter oben beschriebenen Produktverbund 2 mittels der gegenüber der Auflagefläche 16 der Produktpalette 9 nach oben vorstehenden Auflageleisten 15 gemeinschaftlich in Schwerkraftrichtung zu lagern.

In dem aus Figur 4 ersichtlichen zweiten Funktionszustand und bei einer damit verbundenen zweiten Relativposition der Elementeinheit 11 und der Flächeneinheit 12 stehen die Auflageleisten 15 der Elementeinheit 11 bearbeitungsproduktseitig nicht gegenüber der Auflageplatte 15 der Flächeneinheit 12 nach oben vor. Folglich bildet die Produktpalette 9 an ihrer Oberseite eine ebene Auflagefläche 16 aus, die in der nachstehend beschriebenen Weise zur alleinigen Lagerung von Werkstückteilen 36 genutzt wird, die in der Separierstation 10 vom Restgitter 37 gelöst werden.

Bei der in Zusammenhang mit Figur 2 beschriebenen Verfahrbewegung von der Übergabestation 6 zur Separierstation 10 befindet sich die Produktpalette 9 in ihrem ersten Funktionszustand. Beim Transport wird die Produktpalette 9 mittels der Führungsrollen 23 der Elementeinheit 11 an Führungsschienen 24 geführt, die bis an die Separierstation 10 reichen (Figur 6). Die Führungsschienen 24 bilden zusammen mit den Führungsrollen 23 und einem nicht bildlich gezeigten Antrieb eine Transporteinrichtung 25 zum Transport der Produktpalette 9 von der Übergabestation 6 zur Separierstation 10.

Figur 6 bis Figur 9 zeigen die Separierstation 10 mit der Produktpalette 9, auf welcher der Produktverbund 2 abgelegt ist. Oberhalb der mit dem Produktverbund 2 beladenen Produktpalette 9 ist in den Figuren 6 bis 9 eine Separiereinheit 26 gezeigt.

Die Separiereinheit 26 ist mit einer Halteeinrichtung 27 versehen. Die Halteeinrichtung 27 weist Halteorgane in Form von Greifern 28 auf, die sich nach dem Einfahren der mit dem Produktverbund 2 beladenen Produktpalette 9 in die Separierstation 10 noch in ihrer Ausgangsposition befinden, in der sie in der senkrechten Projektion in die Ebene des Produktverbunds 2 außerhalb des Produktverbunds 2 angeordnet sind.

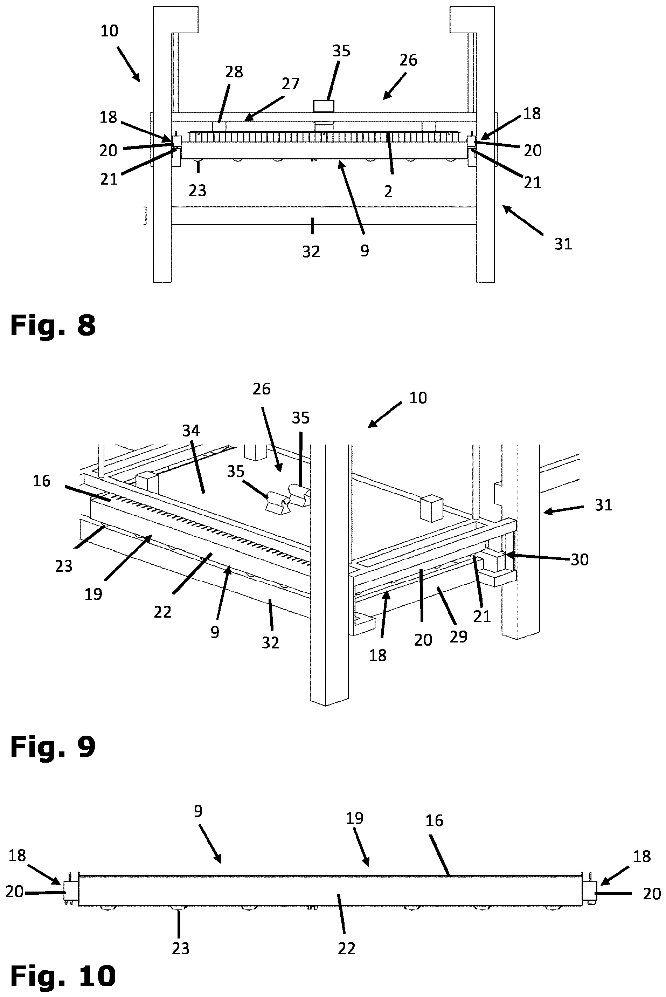

Ausgehend von diesen Verhältnissen werden die Greifer 28 der Halteeinrichtung 27 in eine Position zugestellt, in welcher sie den Produktverbund 2 randseitig untergreifen (Figur 8).

In den Figuren 6 bis 8 ist die Produktpalette 9 mit den Führungsrollen 23 des Rahmenschenkelpaars 18 der Elementeinheit 11 auf mit den Führungsschienen 24 fluchtenden horizontalen Trägern 29 einer Hubvorrichtung 30 in Schwerkraftrichtung abgestützt. Die horizontalen Träger 29 der Hubvorrichtung 30 sind an einem Traggerüst 31 der Separierstation 10 motorisch angetrieben heb- und senkbar.

In den Figuren 6 bis 8 ist die Flächeneinheit 12 der Produktpalette 9 in Schwerkraftrichtung an der Grundplatte 13 der Elementeinheit 11 gelagert. Dabei sind die Rahmenschenkel 22 der Flächeneinheit 12 mit den daran vorgesehenen Führungsrollen 23 in vertikaler Richtung von einem Auflager 32 beabstandet, das an dem Traggerüst 31 der Separierstation 10 fest montiert ist.

Ausgehend von den Verhältnissen gemäß Figur 8 werden die mit dem Produktverbund 2 beladene Produktpalette 9 und die Separiereinheit 26 gemeinschaftlich mittels der Hubeinrichtung 30 abgesenkt.

Im Laufe der Absenkbewegung setzt die Produktpalette 9 mit den an den Rahmenschenkeln 22 der Flächeneinheit 12 vorgesehenen Führungsrollen 23 auf dem Auflager 32 an dem Traggerüst 31 auf.

Bei fortgesetzter Absenkbewegung der Produktpalette 9 bewegt sich die Elementeinheit 11 der Produktpalette 9 relativ zu der nun in Schwerkraftrichtung ortsfest gelagerten Flächeneinheit 12 nach unten. Infolgedessen ergibt sich die zweite Relativposition der Elementeinheit 11 und der Flächeneinheit 12 und damit verbunden der zweite Funktionszustand der Produktpalette 9, in welchem an der Oberseite der Produktpalette 9 als ebene Auflagefläche 16 ausgebildet ist (Figuren 9, 10).

Die Führungsrollen 21 an den Rahmenschenkeln 22 der Elementeinheit 11 liegen nun mit Abstand oberhalb der horizontalen Träger 29 der Hubvorrichtung 30. Die Elementeinheit 11 ist mit der Grundplatte 13 an hierfür vorgesehenen Anschlägen 33 (Figur 5) an der Flächeneinheit 12 in Schwerkraftrichtung gelagert.

Bei Bedarf könnte die erste Relativposition der Elementeinheit 11 und der Flächeneinheit 12 durch Anheben der Elementeinheit 11 relativ zu der auf dem Auflager 32 abgestützten Flächeneinheit 12 wiederhergestellt werden.

Während der Absenkbewegung der Produktpalette 9 wird der Produktverbund 2 mittels der Halteeinrichtung 27 an die Unterseite einer Vibrationsplatte 34 der Separiereinheit 26 gezogen bzw. geklemmt. An der Oberseite der Vibrationsplatte 34 sind als Schwingungserzeuger Vibratoren 35 angeordnet, die nach der Überführung der Produktpalette 9 in den zweiten Funktionszustand die Vibrationsplatte 34 in vertikale Schwingungen versetzen. Aufgrund der Schwingungen der Vibrationsplatte 34 werden die Werkstückteile 36 von dem weiterhin mittels der Halteeinrichtung 27 an der Separiereinheit 26 fixierten Restgitter 37 gelöst. Unter Schwerkraftwirkung werden die von dem Restgitter 37 separierten Werkstückteile 36 schonend und geordnet auf der ebenen Auflagefläche 16 der Produktpalette 9 abgelegt (Figur 11).

In dem Restgitter 37 ggf. vorhandene Werkstückteile, die nicht über Micro- oder Nanojoints an das Restgitter 37 angebunden sind, werden nicht von der Halteeinrichtung 27 fixiert. Diese verbleiben auf den Auflageleisten 14 und werden gemeinsam mit den Auflageleisten 14 abgesenkt, wenn die Produktpalette 9 vom ersten in den zweiten Funktionszustand überführt wird.

Mit dem Auflager 32 an dem Traggerüst 31 der Separierstation 10 fluchten außerhalb der Separierstation 10 angeordnete Führungsschienen 38 (Figur 12). Über die Führungsschienen 38 fährt die nun nur noch mit den Werkstückteilen 36 beladene Produktpalette 9 aus der Separierstation 10 aus an eine Entnahmestation 39. Dabei ist die Produktpalette 9 mit den an den Rahmenschenkeln 22 der Flächeneinheit 12 vorgesehenen Führungsrollen 23 an den Führungsschienen 38 geführt. An der Entnahmestation 39 werden die Werkstückteile 36, die auf der Produktpalette 9 aufliegen, manuell oder automatisiert z.B. mittels eines Sauggreifers absortiert.

Das an der Separiereinheit 26 fixierte Restgitter 37 wird gesondert aus der Separierstation 10 entfernt. Zu diesem Zweck werden die Greifer 28 von dem Restgitter 37 gelöst, wodurch das Restgitter 37 unter Schwerkraftwirkung auf eine geeignete Auflage abgeworfen wird, beispielsweise auf eine Restepalette oder in eine Mulde. Das Abwerfen des Restgitters 37 kann an der Separierstation 10 oder an einem anderen Ort erfolgen. Beispielsweise kann das Restgitter 37 in ein Lager transportiert und dort abgelegt werden.

Alternativ zu dem weiter oben beschriebenen Transport der Produktpalette 9 von der Übergabestation 6 zur Separierstation 10 entlang der Führungsschienen 24 kann als Transporteinrichtung zum Transport der Produktpalette 9 von der Übergabestation 6 zur Separierstation 10 auch die weiter oben beschriebene Handhabungseinrichtung 7 dienen. In diesem Fall wird wie weiter oben beschrieben der auf der Produktpalette 3, die nur den ersten Funktionszustand aufweist, aufliegende Produktverbund 2 von der Rechenauflage 8 an der Übergabestation 6 untergriffen und angehoben. Die Handhabungseinrichtung 7 wird nachfolgend von der Übergabestation 6 an die Separierstation 10 bewegt und legt den Produktverbund 2 auf an der Separierstation 10 angeordneten Produktpalette 9 ab. Die Handhabungseinrichtung 7 wird nach dem Ablegen des Produktverbunds 2 aus der Separierstation 10 zurück zur Übergabestation 6 bewegt.

Von der Übergabestation 6 kann die Handhabungseinrichtung 7 weiter an eine in Figur 1 und Figur 2 gezeigte Aufnahmestation 40 bewegt werden, um ein Rohblech 4 aufzunehmen und dieses auf der an der Übergabestation 6 angeordneten Produktpalette 3 abzulegen. Parallel dazu wird an der Separierstation 10 der weiter oben beschriebene Verfahrensablauf durchgeführt, um die Werkstückteile 36 vom Restgitter 37 zu lösen. Alternativ kann die Aufnahme von Rohblechen an der Aufnahmestation 40 und der Transport an die Übergabestation 6 auf andere Weise als mittels der Handhabungseinrichtung 7 erfolgen, beispielsweise mittels einer Saugereinrichtung oder dergleichen.

Bei der Verwendung der Handhabungseinrichtung 7 für den Transport des Produktverbunds 2 von der Übergabestation 6 zur Separierstation 10 ist es auch möglich, dass der Produktverbund 2 auf der Rechenauflage 8 aufliegend von den Greifern 28 der Halteeinrichtung 27 randseitig untergriffen und fixiert wird. In diesem Fall kann auf die Produktpalette 9 verzichtet werden. In der Separierstation 10 kann in diesem Fall eine beliebige Produktauflage für die Ablage der Werkstückteile 36 angeordnet werden, beispielswiese ein Förderband oder dergleichen. Das Förderband kann sich beispielsweise von der Separierstation 10 bis zur Entnahmestation 39 erstrecken, an der die Werkstückteile 36 von dem Förderband absortiert werden. Das Restgitter 37 kann in diesem Fall von der Rechenauflage 8 aufgenommen und aus der Separierstation 10 transportiert oder an der Separierstation 10 abgeworfen werden.

Der Transport des Produktverbunds 2 von der Übergabestation 6 zur Separierstation 10 kann auch mit Hilfe der Halteeinrichtung 27 erfolgen, die in diesem Fall mittels eines geeigneten Antriebs zwischen der Übergabestation 6 und der Separierstation 10 bewegt wird. Die Halteeinrichtung 27 untergreift in diesem Fall an der Übergabestation 6 mittels der Greifer 28 den Produktverbund 2 randseitig und fixiert diesen. Der Produktverbund 2 wird in dem an der Halteeinrichtung 27 fixierten Zustand von der Übergabestation 6 zur Separierstation 10 transportiert. In der Separierstation 10 werden auf die weiter oben beschriebene Weise die Werkstückteile 36 mittels des Schwingungserzeugers 35 von Restgitter 37 gelöst. Es ist möglich, den Produktverbund 2 an der Separierstation 10 in diesem Fall mittels der Halteeinrichtung 27 auf die weiter oben beschriebene Produktpalette 9 aufzulegen, die vom ersten in den zweiten Funktionszustand überführt wird. Alternativ kann an der Separierstation 10 unterhalb der Halteeinrichtung 27 eine andere Art von Produktauflage angeordnet sein, beispielsweise ein Förderband oder dergleichen. Der Abwurf des Restgitters 37 von der Halteeinrichtung 27 kann auf die weiter oben beschriebene Weise erfolgen.

Eine weitere Möglichkeit zum Transport des Produktverbunds 2 von der Übergabestation 6 zur Separierstation 10 besteht darin, die in Figur 1 gezeigte Produktpalette 3, die nur den ersten Funktionszustand aufweist, mit dem darauf abgelegten Produktverbund 2 von der Übergabestation 6 zur Separierstation 10 zu transportieren. Zu diesem Zweck kann die Produktpalette 3 mittels einer Transporteinrichtung, z.B. in Form eines Krans, eines Gabelstaplers oder dergleichen an der Übergabestation 6 angehoben, zur Separierstation 10 transportiert und dort abgelegt werden. Der Produktverbund 2 wird auch in diesem Fall mittels der Greifer 28 an der Halteeinrichtung 27 fixiert und der weiter oben beschriebene Verfahrensablauf zum Lösen der Werkstückteile 36 vom Restgitter 37 wird durchgeführt. Nach dem Fixieren des Produktverbunds 2 an der Halteeinrichtung 27 und dem Anheben des Produktverbunds 2 von der Produktpalette 3 wird in diesem Fall die Produktpalette 3 aus der Separierstation 10 bewegt und kann z.B. mittels einer Transporteinrichtung in Form eines Krans, Gabelstaplers oder dergleichen zurück an die Übergabestation 6 bewegt werden. An der Separierstation 10 wird nachfolgend die weiter oben beschriebene Produktpalette 9 mit den zwei Funktionszuständen oder eine andere Produktauflage angeordnet, beispielsweise ein Förderband oder dergleichen.

Nach dem Lösen der Werkstückteile 36 vom Restgitter 37 werden die Schwingungserzeuger 35 aktiviert und die Werkstückteile 36 fallen auf die Produktpalette 9 oder auf eine andere Produktauflage. Die Werkstückteile 36 werden mittels der Produktpalette 9 oder auf andere Weise zum Absortieren an die Entnahmestation 39 transportiert. Das an der Halteeinrichtung 27 fixierte Restgitter 37 wird nachfolgend durch Lösen der Klemmung durch die Greifer 28 abgeworfen und kann beispielsweise in einer Mulde oder in einem Restgitterwagen abgelegt werden.

Es ist auch möglich, dass der Produktverbund 2 nicht von der Trennstation bzw. von der Laserschneidmaschine 5 zur Übergabestation 6 der maschinellen Vorrichtung 1 transportiert wird. In diesem Fall kann der Produktverbund 2 automatisiert oder teilautomatisiert aus einem Lager oder dergleichen entnommen und an die Übergabestation 6 transportiert werden.

## Patentansprüche

1. Verfahren zum Handhaben eines lösbaren Produktverbunds (2), der mindestens ein Werkstückteil (36) und ein Restgitter (37) aufweist, das Verfahren umfassend:
Lösen des mindestens einen Werkstückteils (36) von dem Restgitter (37) mittels mindestens eines Schwingungserzeugers (35) an einer Separierstation (10),
**gekennzeichnet durch**
Fixieren des Produktverbunds (2) an einer Halteeinrichtung (27), die den Produktverbund (2) randseitig mit mindestens einem Halteorgan (28) untergreift, wobei das Lösen des mindestens einen Werkstückteils (36) von dem Restgitter (37) an dem mittels der Halteeinrichtung (27) fixierten Produktverbund (2) erfolgt.

2. Verfahren nach Anspruch 1, bei dem der Produktverbund (2) an der Separierstation (10) mittels der Halteeinrichtung (27) von einer Produktpalette (3, 9) aufgenommen wird.

3. Verfahren nach Anspruch 1 oder 2, bei dem der Produktverbund (2) mittels einer Transporteinrichtung (7, 25) von einer Übergabestation (6) an die Separierstation (10) transportiert wird.

4. Verfahren nach Anspruch 3, bei dem der Produktverbund (2) von der Übergabestation (6) auf der Produktpalette (3, 9) gelagert mittels der Transporteinrichtung (7, 25) zur Separierstation (10) transportiert wird.

5. Verfahren nach Anspruch 4, bei dem die Produktpalette (9) einen rechteckigen Palettenrahmen (17) mit zwei Rahmenschenkelpaaren (18, 19) aufweist, wobei ein erstes der Rahmenschenkelpaare (18) eine erste Führungseinrichtung (21) aufweist, mittels derer die Produktpalette (9) beim Transport von der Übergabestation (6) an die Separierstation (10) geführt wird und/oder bei dem ein zweites der Rahmenschenkelpaare (19) eine zweite Führungseinrichtung (23) aufweist, mittels derer die Produktpalette (9) von der Separierstation (6) an eine Entnahmestation (39) transportiert wird.

6. Verfahren nach Anspruch 5, bei dem die Produktpalette (9) eine mit Auflageelementen (14) versehene Elementeinheit (11) aufweist, die eines der Rahmenschenkelpaare (18) umfasst, sowie eine mit einer Auflagefläche (16) versehene Flächeneinheit (12), die das andere Rahmenschenkelpaar (19) umfasst, wobei in einem ersten Funktionszustand der Produktpalette (9), in der die Auflageelemente (14) der Elementeinheit (11) gegenüber der Auflagefläche (16) der Flächeneinheit (12) nach oben vorstehen, der Produktverbund (2) mittels der Halteeinrichtung (27) aufgenommen wird und wobei in einem zweiten Funktionszustand der Produktpalette (9), in der die Auflageelemente (14) der Elementeinheit (11) nicht gegenüber der Auflagefläche (16) der Flächeneinheit (12) nach oben vorstehen, von dem Restgitter (37) gelöste Werkstückteile (36) auf der Produktpalette (9) abgelegt werden.

7. Verfahren nach einem der Ansprüche 4 bis 6, bei dem die Produktpalette (3, 9) mit dem daran gelagerten Produktverbund (2) an der Übergabestation (6) von einer Auflage der Transporteinrichtung untergriffen und auf der Auflage aufliegend an die Separierstation (10) transportiert wird.

8. Verfahren nach Anspruch 3, bei dem der Produktverbund (2) an der Übergabestation (6) von einer Auflage (8) der Transporteinrichtung (7) untergriffen und auf der Auflage (8) aufliegend von der Übergabestation (6) zur Separierstation (10) transportiert wird.

9. Verfahren nach Anspruch 3, bei dem der Produktverbund (2) an der Übergabestation (6) von dem mindestens einen Halteorgan (24) der Halteeinrichtung (27) randseitig untergriffen und mittels der Halteeinrichtung (27) zur Separierstation (10) transportiert wird.

10. Maschinelle Vorrichtung (1) zum Handhaben eines lösbaren Produktverbunds (2), der mindestens eine Werkstückteil (36) und ein Restgitter (37) aufweist, umfassend:
mindestens einen Schwingungserzeuger (35) zum Lösen des mindestens einen Werkstückteils (36) von dem Restgitter (37) an einer Separierstation (10),
**gekennzeichnet durch**
eine Halteeinrichtung (27) zum Fixieren des Produktverbunds (2), die mindestens ein Halteorgan (28) zum randseitigen Untergreifen des Produktverbunds (2) aufweist, wobei die maschinelle Vorrichtung (1) ausgebildet ist,
das mindestens eine Werkstückteil (36) an dem mittels der Halteeinrichtung (27) fixierten Produktverbund (2) aus dem Restgitter (37) zu lösen.

11. Maschinelle Vorrichtung nach Anspruch 10, weiter umfassend:
eine Transporteinrichtung (7, 25) zum Transport des Produktverbunds (2) von einer Übergabestation (6) der maschinellen Vorrichtung (1) zur Separierstation (10).

12. Maschinelle Vorrichtung nach Anspruch 11, weiter umfassend: eine Produktpalette (3, 9) zur Auflage des Produktverbunds (2), wobei die Transporteinrichtung (25) zum Transport der Produktpalette (3, 9) mit dem daran gelagerten Produktverbund (2) von der Übergabestation (6) zur Separierstation (10) ausgebildet ist.

13. Maschinelle Vorrichtung nach Anspruch 12, bei dem die Produktpalette (9) einen rechteckigen Palettenrahmen (17) mit zwei Rahmenschenkelpaaren (18, 19) aufweist, wobei ein erstes der Rahmenschenkelpaare (18) eine erste Führungseinrichtung (21) zur Führung der Produktpalette (9) beim Transport von der Übergabestation (6) an die Separierstation (10) aufweist und/oder wobei ein zweites der Rahmenschenkelpaare (19) eine zweite Führungseinrichtung (23) zur Führung der Produktpalette (9) beim Transport von der Separierstation (6) an eine Entnahmestation (39) aufweist.

14. Maschinelle Vorrichtung nach Anspruch 13, bei welcher die Produktpalette (9) eine mit Auflageelementen (14) versehene Elementeinheit (10) aufweist, die eines der Rahmenschenkelpaare (18) umfasst, sowie eine mit einer Auflagefläche (16) versehene Flächeneinheit (12), die das andere Rahmenschenkelpaar (19) umfasst, wobei die Elementeinheit (11) und die Flächeneinheit (12) von einem ersten Funktionszustand, in dem die Auflageelemente (14) der Elementeinheit (11) gegenüber der Auflagefläche (16) der Flächeneinheit (12) nach oben vorstehen, in einen zweiten Funktionszustand überführbar ist, in der die Auflageelemente (14) der Elementeinheit (11) nicht gegenüber der Auflagefläche (16) der Flächeneinheit (12) nach oben vorstehen.

15. Maschinelle Vorrichtung nach einem der Ansprüche 12 bis 14, bei der die Transporteinrichtung ausgebildet ist, die Produktpalette (3, 9) mit dem daran gelagerten Produktverbund (2) an der Übergabestation (6) mit einer Auflage zu untergreifen und auf der Auflage aufliegend an die Separierstation (10) zu transportieren.

16. Maschinelle Vorrichtung nach Anspruch 11, bei der die Transporteinrichtung (7) eine Auflage (8) zum Untergreifen des Produktverbunds (2) aufweist und ausgebildet ist, den Produktverbund (2) auf der Auflage (8) aufliegend von der Übergabestation (6) zur Separierstation (10) zu transportieren.

17. Maschinelle Vorrichtung nach Anspruch 11, bei der die Transporteinrichtung durch die Halteeinrichtung (27) gebildet ist, die ausgebildet ist, den Produktverbund (2) an der Übergabestation (6) mit dem mindestens einen Halteorgan (28) randseitig zu untergreifen und zur Separierstation (10) zu transportieren.
